Europäisches Patentamt

European Patent Office

Office européen des brevets

(19)

(11) Publication number: **0 410 341 A2**

# EUROPEAN PATENT APPLICATION

(21) Application number: **90114061.6**

(22) Date of filing: **23.07.90**

(51) Int. Cl.⁵: **G01N 30/72, G01N 30/28**

(30) Priority: **28.07.89 IT 2135889**
**06.03.90 IT 1957790**

(43) Date of publication of application:
**30.01.91 Bulletin 91/05**

(84) Designated Contracting States:
**DE FR GB NL**

(71) Applicant: **CARLO ERBA STRUMENTAZIONE**
**S.p.A.**
**Casella Postale Aperta**
**I-20090 Rodano Milano(IT)**

(72) Inventor: **Ramsey, Edward**
**Via Corridoni 20**
**I-20063 Cernusco sul Naviglio Milano(IT)**
Inventor: **Sisti, Georgio**
**P.za S. Agostino 7**
**I-20123 Milano(IT)**

(74) Representative: **Marietti, Giuseppe**
**CENTRO DI CONSULENZA IN PROPRIETA'**
**INDUSTRIALE Viale Caldara, 38**
**I-20122 Milano(IT)**

(54) **Method and apparatus for interfacing chromatographic equipment with a mass spectrometer.**

(57) In an interfacing device for coupling chromatographic equipment with a mass-spectrometer the sample components eluting through or from the chromatographic column (4) are heated to a temperature sufficient to keep them in a vaporized condition when eluting from the column outlet into a mass spectrometer ion source (27). To avoid alteration of the mobile phase, insulating means (6) are provided upstream of the heating means (5), and heat dissipating means (7) are positioned upstream of said insulator, to dissipate any non-required heat which could be transferred to the upstream portion of the column (4).

Fig. 5

Xerox Copy Centre

# METHOD AND APPARATUS FOR INTERFACING CHROMATOGRAPHIC EQUIPMENT WITH A MASS SPEC-
## TROMETER

This invention relates to an improved method and apparatus for interfacing chromatographic equipment and a mass spectrometer.

Coupling of a chromatographic analyzing equipment to a mass spectrometer is a well know technique. Combined gas chromatography-mass spectrometry (GC-MS) and high performance liquid chromatography-mass spectrometry (HPLC-MS) have been known in the art for many years and have becomes widely used because of the advantages that mass spectrometry provides both in qualitative and quantitative analyses.

Supercritical fluid chromatography (SFC), like HPLC, does not require vaporization of the sample for its separation through the column, and has thus been widely used for studying involatile compounds not amenable to GC analysis. This necessity has recently risen for interfacing SFC with MS (SFC-MS) in order to provide SFC with the above cited advantages of mass spectrometry analysis. Actually, because of the nature of SFC, interfacing is not as easy as in GC-MS. More particularly, the main difficulties come from the requirement of maintaining supercritical fluid conditions in the interface while avoiding at the same time the "deposition", or precipitation of the sample components eluting from the column end.

In fact, said sample components are solvated in a supercritical solution, in which they are maintained up util they elute from the restriction at the column end. In order to acheive supercritical conditions during the separation it is necessary to maintain the column at or above the supercritical temperature of each individual mobile phase used and also place a form of restriction at the column end such that the supercritical pressure of each individual mobile phase is reached or exceeded. Various forms of restrictor can be used to limit the flow rate at the column outlet and thus provide a method by which the pressure within the column can be regulated. Possible forms of restrictor involve the attachment at the column outlet of an appropriate length of narrow bore tubing of uniform internal diameter, or of a tube within which a permeable material (e.g. sintered glass) has been deposited, or of a length of tubing whose terminus or section prior to the terminus has been tapered to produce a narrow orifice. Alternatively, with this latter approach, the end of the fused silica capillary column can itself be tapered to provide the restriction.

At the point of restriction a sudden decompression of the supercritical fluid mobile phase occurs, which is then entirely or almost entirely vaporized:

such decompression dramatically changes the solvating properties of said fluid in that the fluid abruptly passes from a region of relatively high pressure on the inlet side of the restrictor under which the supercritical phase exists to the outlet side of the restrictor which is situated in a region of relatively low pressure where it rapidly expands into the gas or vapour phase. This rapid phase change is accompanied by a localized region of cooling due to the Joule - Thompson effect. Thus, the sample eluting from the column restrictor arrangement, being no longer sufficiently solvated by the vaporizing mobile phase and subjected to rapid cooling, may precipitate and return to a solid condition.

In the specific case of a supercritical fluid chromatograph coupled to a mass spectrometer the supercritical fluid may be permitted to expand into an evacuated region of the mass spectrometer, prior to ionization and subsequent mass analysis, thereby promoting the dramatic nature of the phase changing and cooling effect previously described.

Two main methods have been utilized up to now to overcome the cited difficulties.

According to the first method, a moving belt interface is used. This device (patented by Finnigan MAT, U.S.A.) is used for both liquid cromatography LC-MS and SFC-MS interfacing, and physically transports on the belt the sample from a heated deposition point near the column end to the ion source. The main disadvantages of this method are that the relating equipment is very expensive, and it is suited for relatively large volumes of sample/eluent only.

In the second method, which is used for capillary SFC-MS coupling, the sample is vaporized by heating of the column end or of the restrictor area by means of an electric resistor. A disadvantage of this method is that a high degree of mechanical accuracy is required to ensure adequate thermal contact between the electric resistor heating element and the column outlet restrictor. Another disadvantage of this method is that the electric resistor heating element must be positioned such that under ideal circumstances only the actual zone of decompression is heated. In practice, due to nonideal positioning of the electric resistor heating element, the mobile phase prior to reaching the decompression zone becomes prematurely heated, thereby altering its physical and solvating properties, which in severe cases can lead to either complete or partial precipitation of the solutes prior to reaching the more strongly heated decompression zone. Therefore, in the case of the moving belt interface supercritical conditions are not maintained within the interface since the sample must first be deposited onto the belt, and with the electric resistor heating of the column outlet restrictor difficulties may arise in accurately maintaining supercritical fluid conditions upstream of the decompression zone.

Similar problems arise,less dramatically, also in an LC-MS interfacing, where a heated transfer tube is required in order to vaporize the liquid sample and enable it to reach the ionization chamber of the mass spectrometer. Accordingly, the aim of the invention is to provide a method for interfacing a chromatographic equipment (particularly an SFC equipment) with a mass spectrometer which allows to maintain the required mobile phase conditions (especially supercritical fluid conditions) in the chromatographic column while vaporizing the sample components eluting from the column end or the column restriction area.

This invention seeks also to provide an apparatus for interfacing a chromatographic equipment (particularly an SFC equipment) with a mass spectrometer by selectively vaporizing sample components eluting from the column end without altering the mobile phase fluid conditions in said column.

A further aim of the invention is to provide an interfacing apparatus that could be used with any kind of chromatographic equipment with little or no modification.

According to one aspect, the invention provides a method for interfacing a chromatographic equipment with a mass spectrometer, characterized in heating the sample components eluting through or from the downstream portion of the chromatographic column to obtain vaporized eluted components; and insulating said column heating means to reduce heat transfer to the upstream portion of said column.

According to a second aspect, the invention provides an apparatus for interfacing a chromatographic equipment with a mass spectrometer, characterized in comprising means for heating the sample components eluting through or from the downstream portion of the chromatographic column to obtain vaporized eluted components and means for insulating said column heating means to reduce heat tranfer to the upstream portion of the chromatographic column.

In a preferred embodiment, upstream of the insulating means are provided further means for dissipating or transmitting heat to said upstream column portion.

The invention will now be described in more detail, with reference to the enclosed illustrative and non limiting drawings, in which:

- fig. 1 is a schematic view of an embodiment of the invention;

- fig. 2 is a perspective view of a preferred embodiment of heating means;
- fig. 3 and 4 are schematic sectional views of two possible embodiments of the insulating elements;
- fig. 5 is a sectional view of a preferred interface apparatus according to the invention.
- fig. 6 is a partially sectional view of a further embodiment of the invention; and
- figures 7 and 8 are enlarged sections of two versions of fig. 6 embodiment.

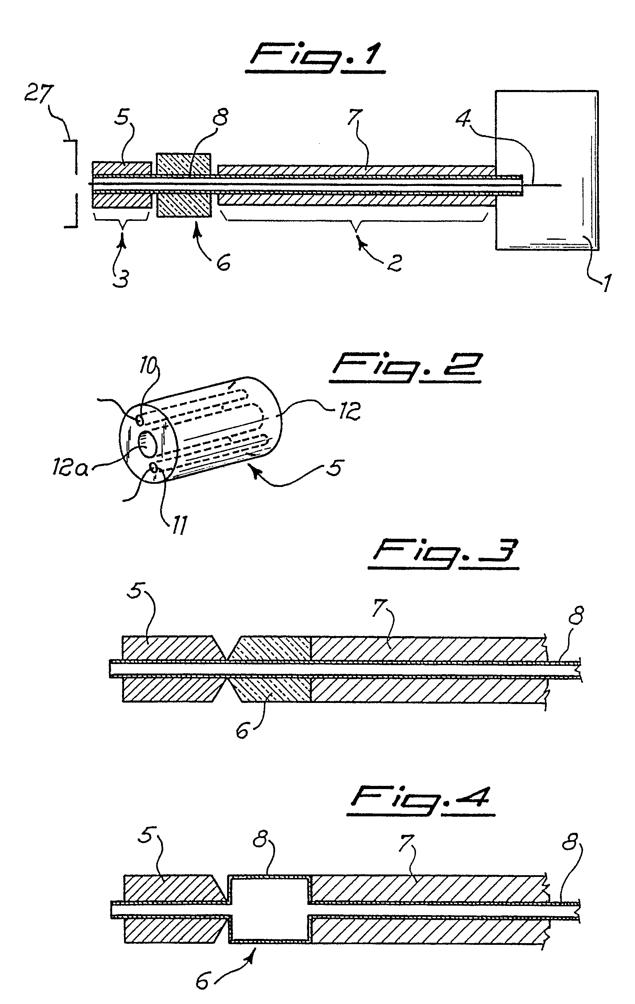

According to the invention, the sample components arriving from the chromatographic equipment 1 (fig. 1) through transfer duct zone 2 to the interface zone are heated while eluting through or from the downstream portion of the chromatographic column 4, while at the same time avoiding heat transfer from the zone 3 of the interface in the case of SFC-MS or LC-MS operation modes.

To this purpose, the apparatus according to the invention comprises heating means 5 provided in zone 3 to heat said downstream portion of the column and insulating means 6 provided upstream said heating means 5 to avoid or reduce the heat transfer to the immediately upstream portion of said column (i.e. to transfer zone 2).

Most preferably heat dissipating means 7 are also provided to dissipate heat which could be transferred to zone 2 from zone 3.

It should be understood that the terms "upstream" and "downstream" portion refer to the corresponding portions of the column in the interface area only. More specifically, the downstream portion is the column last portion, including the end portion of any additional duct as a restrictor in SFC, starting from the insulating element 6, corresponding to zone 3. The upstream portion is that column portion which is immediately upstream the insulating means.

According to the invention, it is thus possible to effect a less localized heating, i.e. to heat also a portion of the column, without substantially altering the conditions of the mobile phase in a column section upstream the insulating means 6.

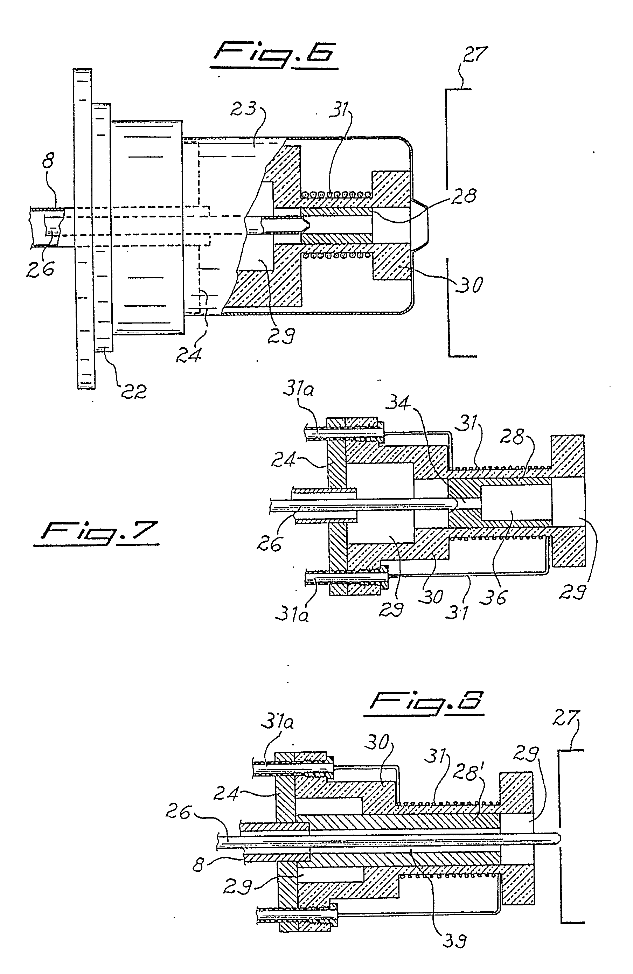

As schematically shown in fig. 1, in the preferred embodiment a metal duct 8 is provided to act as a supporting and transfer duct for the chromatographic column 4 in a way known in the art. Said transfer duct 8 extends from the chromatographic equipment through said dissipating and insulating means and at least part of the cited heating means. In the preferred embodiment, as better shown in fig. 5, the transfer duct 8 goes through heating means 5 and protrudes into interface "nose" 9, almost to the ionization chamber.

Fig. 2 discloses a schematic perspective view of a possible embodiment of the heating means 5, that comprise a resistance element 10, a thermocouple 11 and a metal body 12 having a high thermal conductivity. Most preferably the metal body is bronzal or similar metal.

The metal body 12 is provided with a central hole 13 housing the previously cited transfer duct 8 and with two other essentially axial holes to house said resistance element 10 and thermocouple 11, respectively.

In the preferred embodiment, the resistance element is a Twin Core Heater, manufactured by Philips Scientific (Cambridge, UK) and reversibly engages its relevant hole to be easily substitued when required.

Any means suitable to thermally insulate the heating means from the upstream portion of the column may be used.

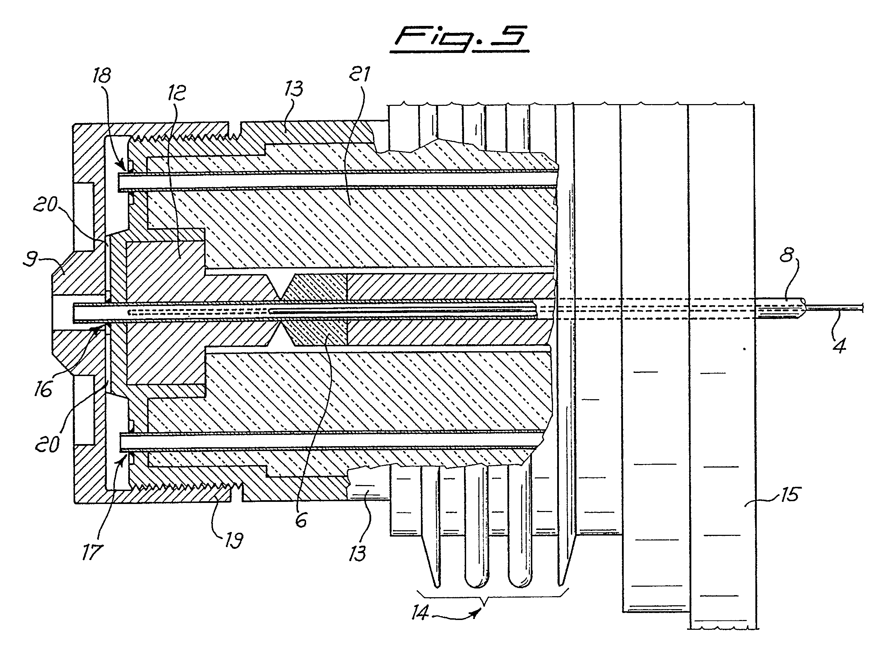

Two possible embodiments of the insulating means are respectively shown in figures 3 and 4.

More particulary, in fig. 3 the insulating element 6 is a ceramic element, while in fig. 4 element 6 is consisting of an empty chamber integral and coaxial with duct 8, e.g. an expansion of transfer duct 8, which separates the dissipating means 7 from heating means 5 and, being connected with the ionization chamber, is under high vacuum and thus provides a good insulating effect.

However some heat, because of the high differential of temperature between zone 3 and zone 2 (e.g. 300 C degrees and 50 C degrees in a usual SFC-MS connection) may transfer through insulating element 6. This heat transfer will especially occur if, as in the embodiment disclosed in figg. 1-5 duct 8 is extending through elements 6, 7 and at least part of heating body 12.

In order to avoid any substantial alteration of the mobile phase in the column upstream portion, heat dissipating means 7 are provided upstream said insulating means 6. As shown in the drawings, said heat dissipating means are advantageously consisting of a metal sleeve having high thermal conductivity, such as a copper sleeve, enclosing parts of column 4 and transfer duct 8 (if any).

In a preferred embodiment the copper sleeve 7 is provided with a resistor and a thermocouple (not shown) to transmit heat to transfer duct 8 and/or column 4 when required, this being independently controlled from zone 3. This heat transmission is needed in order to keep column 4 at the preselected oven temperature in case of an SFC-MS or GC-MS interfacing. In this case latter sleeve 7 is therefore part of said known transfer line heating means. Sleeve 7 is thus controllably heated when required, and the heating is immediately stopped by suitable switching means when the thermocouple senses a heat transfer from downstream which raises the sleeve temperature over its preselected value.

In fig. 5 is disclosed a preferred embodiment of the actual interfacing area in an apparatus according to the invention, comprising a casing 13 for containing the cited interface elements 5-11. The casing 13 is similar to those known in the art for GC-MS interfacing and comprises a flange 15 and a bellows portion 14 to secure it to the mass spectrometer ionization chamber.

The front face of casing 13 is provided with three ports 16, 17 and 18, which house the cited transfer duct 8 and two feeding lines for chemical ionization gas and calibration reference gas respectively. Duct 8 and the feeding lines are welded to their relevant ports in order to obtain a casing face which is vacuum proof except for said feeding lines and transfer duct.

A "U" shaped element 19 is screwed around the end portion of casing 13 to act as a manifold element in order to collect through grooves 20 both chemical ionization and reference gases and have them flow through drilled "nose" 9 substantially coaxially with the sample gases coming from transfer duct 8, into the ionization chamber.

As previously mentioned, the transfer duct may or not protrude from heating element 12 into nose 9. Heating element 5 is mechanically located in place against the inner side of cited front face of casing 13 and is insulated by insulator 21 and, for a better comprehension of the drawing, thermocouple and resistance elements 10 and 11 are not shown.

As shown in fig. 5, the faces between heating element 5 and insulator 6 are cut in a conic shape to minimize interfacial heat transfer.

The end of chromatographic column 4 may be positioned in any place of the transfer duct 8 between the cone shaped face of heating element 5 and the ion source according to the actual interfacing characteristics. As an example, in a usual GC-MS interface apparatus the column end is protruding from duct 8 into the ion source (not shown). In SFC-MS or LC-MS interfacing, column 4 end will be positioned inside duct 8, e.g. in one of the two positions shown in full and in dotted lines in fig. 5.

In figures 6-8 is disclosed an alternative embodiment of the interface, where the transfer duct 8 extends only to the insulating means.

In this embodiment the interface is and a casing 23 comprising of a metal base 22 supporting a flange 24 similar to that disclosed in fig. 5 and is provided with an opening 5, opposite to the flange 24 and adjacent to the mass spectrometer ion source 27.

A chromatographic column 26 or an outlet from the column, coming from the chromatographic equipment and passing through base 22 and flange 24 is connected to a heatable duct 28, made of a material having a high thermal conductivity, such as bronzal, and corresponding to metal body 12 of fig. 2.

The duct 28 is supported and kept in alignment and in contact with the column 26 by an elongated body 10 of an electrically insulating material such as ceramic or machinable glass.

Said body 10 is extending from flange 24 to that part of casing 23 where opening 25 is positioned, and is provided along its axis with a longitudinally extending hollow space 29 housing both the duct 28 and the column 26.

The heating means are generally consisted of a resistor, which can lither be built-in with the duct 8 or contact it or heat it indirectly. The latter solution is shown in figures 6-8 embodiments, where a resistance wire 31 is situated around said elongated body in a position corresponding to the position of duct 28.

To ensure a better heat transmission through the supporting body 30, the wire 31 is positioned in a groove of the body 30; duct 28 and wire 31 being thus separated by a reduced thickness partition. Alternatively, the wire 31 is positioned partially inside the ceramic body.

Although not shown in fig. 6 casing 23 may also have pumping ports to ensure that internal end portion of the interface operates under high vacuum.

If the column 26 is an SFC column, which is the case of the column shown in figures 6 and 7, the column end is corresponding to a restrictor. Thus, in this case, it is the restrictor (or its tip) which is housed in contact with the duct 8.

Resistance wire 31 has a diameter which is much smaller than the feeding wire 31a and is preferably in nickel, rherium or tungsten, with a power consumption ranging from 0,5 to 100 watts. Feeding wire 31a is teflon coated or provided with similar insulating means.

The resistance wire 31, after having heated the duct 28, will progressively heat the whole body 30. To avoid the column 26 last portion (i.e. that portion of column 26 which goes from flange 24 to column end), being heated by body 10, suction means are provided to keep under high vacuum at least that inner space 29 region which houses and surrounds said column last portion and which corresponds to the insulating means 6 of fig. 1. Also, a teflon coat or other insulation is provided on that part of feeding wire 31a which goes through body 30 and flange 24 to power sources (not shown).

In a preferred embodiment the heatable duct 28 is interchangeable and differently designed according to the column characteristics, to allow the use of the interface with SFC, LC and GC equipments. Fig. 7 shows a preferred structure for SFC-LC interfacing, where duct 28 has a first length 34 having an inside diameter which is generally equal to the outside diameter of column 26.

The front portion 35 of duct 28 is tapered to better position column 26 (shown in hatched lines) in contact with duct 28. Downstream first length 34, the duct 28 is provided with a second length 36 having an inner diameter much greater than first length 34. Preferred values of said diameter are from 2 to 20 mm. Second length 36 is long from 4 to 30 mm and is thus forming a desolvation chamber, i.e. the chamber where the mobile phase is expanded and/or vaporized ceasing its solvating action upon the sample components.

The duct is reversably insertable in the elongated body 30 and does not protude into the hollow space 29, being thus positioned between column end and ion source.

More particularly, the distance from the point of discharge of SFC, LC eluent (i.e. the column end), and the ion source electron beam is in the range from 6 to 60 mm. In fig. 8 is shown an embodiment particularly suitable for a GC - MS interfacing. In this case, duct 28 was replaced by duct 28′ having a design somewhat different to that shown in fig. 7; that is, the upstream length 37 of duct 28 has an inner diameter which is much greater than that of the remaining portion 39 of the duct, and is designed to fit around the column transfer tube 8. Transfer tube 8 is positioned between the gas chromatographic equipment and the actual interface with the mass spectrometer, and is provided with a vacuum tight seal at its upstream extremity; being connected with space 29, the tube 8 is thus kept under vacuum conditions.

The inside diameters of tube 8 and portion 39 of duct 28 are preferably equal.

In this version, therefore, as shown in fig. 8, the column and is protruding from duct 28 and is positioned in correspondence to ion source 27.

In both configuration, i.e. for SFC,LC coupling and for GC interfacing, any suitable means such as screw thread is provided for interchargeably fixing ducts 28 and 28′ to supporting member 10 in order to interchange ducts according to column characteristics.

Moreover, in all embodiments shown in figures 6-8 transfer tube 8 is preferably provided with heating/dissipating means 7 as previously disclosed with reference to figures 1-5.

It is thus evident that the above disclosed apparatus can advantageously be used for interfacing GC, LC and SFC equipments with a mass spectrometer in an easy and interchangeable way, i.e. without the need of changing the hardware of the interface when passing from a GC-MS connection to a SFC-MS or LC-MS connection.

During operation, the downstream portion of column 4, or metal duct 28, is heated by the relevant heating element to a temperature sufficient to vaporize or keep in a vaporized state the sample components eluting from the column end.

The heat eventually transferred to the column upstream portion through insulating means 6, or 10 and 29, is dissipated by dissipating means 7 when said upstream portion temperature exceed a preselected temperature.

If required, during analysis the dissipating means may be heated to a preselected temperature which may be almost identical to the heating element temperature (in a GC-MS interfacing) or quite different from this one (SFC-MS interfacing). In the latter case, the thermocouple relevant to metal sleeve 7 will stop said sleeve heating when, because of heat transfer from heater 5 the temperature value of sleeve 7 is raised above its previously selected one.

## Claims

1) A method for interfacing a chromatographic equipment with a mass spectrometer, characterized in heating the sample components eluting through or from the downstream portion of said chromatographic equipment column to obtain vaporized eluted components and insulating the heating means to reduce heat transfer to upstream portion of said column.

2) A method according to claim 1, characterized in dissipating or transmitting heat to said upstream column portion.

3) A method according to claim 1 or 2, characterized in heating said column downstream portion through a transfer duct (8) housing said column (4; 26).

4) A method according to claim 1 or 2 characterized in that components eluting from said column are passed through a heated duct, or desolvation chamber, (28) positioned at least in part between the column end and the mass spectrometer ion source.

5) A method according to any claim 1 to 4, characterized in insulating said heating means by means of a high vacuum region (6; 29).

6) A method according to claim 2, characterized in using highly conductive heat dissipating means (7) and in utilizing said dissipating means for heating the upstream portion of the chromatographic column if and when required.

7) An apparatus for interfacing a chromatographic equipment with a mass spectrometer, characterized in comprising:
means (5; 28) for heating the sample components eluting through or from the downstream portion of the chromatographic column (4; 26) to obtain vaporized eluted components and means (6; 29) for insulating said heating means to reduce heat transfer to the upstream portion of the chromatographic column

8) An apparatus according to claim 7 characterized in further comprising means (7) for dissipating or transmitting heat from or to said upstream portion of the said column (4; 26).

9) An apparatus according to claim 8, characterized in that said chromatographic column (4; 26) is housed in and supported by a transfer duct (8) extending from the chromatographic equipment through said heat dissipating and insulating means, and at least part of said heating means (5).

10) An apparatus according to claim 8 or 9, characterized in that said heating means (5) comprise a resistance element (10), a thermocouple (11) and a heat conducting metal body (12) such as bronzal or similar metal, said body housing at least part of said transfer duct (8) and/or said chromatographic column.

11) An apparatus according to claim 10, characterized in that said resistance element (10) is a Twin Core Heater by Philips Scientific (UK) and is housed in said metal body (12).

12) An apparatus according to claim 7, characterized in that said insulating means (6) is a ceramic element.

13) An apparatus according to claim 7, characterized in that said insulating means (6) is an empty chamber provided on said transfer duct (8).

14) An apparatus according to claim 7, characterized in that said heat dissipating means (7) is a higly conductive metal sleeve such as copper or similar metal.

15) An apparatus according to claim 14, characterized in that said metal sleeve is provided with a resistance element and a thermocouple for controllably heat said sleeve to a preselected value.

16) An apparatus according to any claim from 7 to 15, in which a casing (13) houses the interface elements, characterized in that said casing front face is provided with three ports (16, 17, 18) housing said transfer duct (8) and two feeding lines for reference gas and chemical ionization gas, respectively, and in that a manifold element (19) is positioned around the end portion of said case, said manifold element being provided with one output port to the ion source and with means (20) to coaxially flow said reference gas and ionization gas with the vaporized sample components through said output port to said ionization chamber.

17) An apparatus according to claim 7, characterized in that said heating means comprise a resistance element (31), a thermocouple and a heat conducting metal duct (28) positioned between the column end and the ion source (27) of the mass spectrometer, and in that said metal duct (28) is supported and aligned with the said chromatographic column by means of an electrically insulating body (30) provided with a longitudinally extending inner hollow space (29) housing said heatable duct (28) and the last portion of said column (26); said column end being in contact with and supported by said heatable duct.

18) An apparatus according to claim 17, characterized in that said heatable duct (28) is provided with a first length having an inside diameter generally equal to the outside diameter of the column end, and a second length (32), or heatable desolvation chamber, having an inside diameter within the range from 2 to 20 mm and a length within the range form 4 to 30 mm.

19) An apparatus according to claim 17, characterized in that said resistance element is a wire (31) winded outside or within said electrically insulating body (30) on a location corresponding to the said heatable duct (28) position.

20) An apparatus according to any claim from 7 to 19, characterized in that said chromatographic equipment is a Supercritical Fluid Chromatography equipment.

*Fig.1*

*Fig.2*

*Fig.3*

*Fig.4*

_Fig.5_

EP 0 410 341 A2

Fig.6

Fig.7

Fig.8